# FASCICULE DE BREVET EUROPEEN

(11) **EP 2 711 316 B1**
(45) Date de publication et mention de la délivrance du brevet: **20.07.2016**
(21) Numéro de dépôt: 13183180.2
(22) Date de dépôt: 05.09.2013
(51) Int. Cl.: B65G 47/244

(54) **Dispositif de transport de récipient susceptible de faire tourner le récipient sur lui-même par entraînement magnétique**
Fördervorrichtung für Behältnisse geeignet zur Drehung des Behältnisses um die eigene Achse mittels magnetischen Antriebes
Conveying device for containers suitable for rotating the container about its axis with a magnetical drive

(30) Priorité: 20.09.2012 FR 1258818
(43) Date de publication de la demande: 26.03.2014
(73) Titulaire: SIDEL PARTICIPATIONS, 76930 Octeville-sur-Mer (FR)
(72) Inventeur: Fevre, Sébastien, 76930 OCTEVILLE SUR MER (FR); Feuilloley, Guy, 76930 OCTEVILLE SUR MER (FR)
(74) Mandataire: Siloret, Patrick

(56) Documents cités:
- EP-A1- 1 767 473
- EP-A1- 2 100 717
- DE-A1- 19 542 048
- FR-A1- 2 918 652

## Description

L'invention concerne un dispositif de transport de récipient, notamment de récipient thermoplastique.

L'invention concerne plus particulièrement un dispositif de transport pour un récipient muni d'un col, notamment pour un récipient en matériau thermoplastique, qui comporte :
- un support mobile le long d'un trajet déterminé ;
- un organe de préhension du récipient par son col qui est porté par le support de manière rotative autour d'un axe vertical ;
- un rotor qui est monté solidaire en rotation avec l'organe de préhension et qui comporte à sa périphérie une pluralité d'éléments magnétiques agencés en couronne ;
- un stator linéaire formé par au moins un rail d'éléments magnétiques qui est agencé de manière fixe sur au moins une portion du trajet et qui comporte une succession d'éléments magnétiques agencés parallèlement au trajet ;
dans lequel chaque élément magnétique du stator est susceptible d'interagir par aimantation avec des élément magnétiques proximaux du rotor pour entraîner en rotation l'organe de préhension lors de son déplacement le long du trajet.

De tels dispositifs de transport sont communément utilisés dans les machines de fabrication de récipients en matériau thermoplastique, en particulier pour transporter des préformes thermoplastiques au travers d'un four.

De telles préformes sont obtenues généralement par injection et présentent un corps cylindrique tubulaire fermé à l'une de ses extrémités axiales, et qui est prolongé à son autre extrémité par un col, lui aussi tubulaire. Le col est généralement injecté de manière à posséder déjà sa forme définitive tandis que le corps de la préforme est appelé à subir une déformation relativement importante pour former le récipient final suite à une opération de soufflage.

Un récipient final est réalisé par formage de la préforme. L'opération de formage du corps de la préforme nécessite que celui-ci soit porté à une température supérieure à la température de transition vitreuse du matériau. On procède à un conditionnement thermique de la préforme en la faisant circuler le long d'un trajet à l'intérieur d'un four. Le four comporte des moyens de chauffage qui sont par exemple formés par des lampes à infrarouge dans lesquelles la préforme est déplacée par le dispositif de transport.

Pour que le corps de la préforme soit chauffé de manière homogène, il est connu de conférer à l'organe de préhension un mouvement de rotation propre de manière que la préforme tourne autour d'un axe passant par son col durant le trajet.

Les organes de préhension destinés à des dispositifs de transport traversant un four ne sont généralement pas de simples pinces de serrage pour permettre d'entraîner le récipient en rotation autour de l'axe principal du col. Il s'agit par exemple d'un mandrin qui est emboîté à force dans le col, ou bien d'un mandrin qui saisit le col par sa paroi externe.

Dans les dispositifs de transports connus, l'organe de préhension est entraîné en rotation par des moyens d'entraînement mécanique dit "pignon-crémaillère". L'organe de préhension est solidaire en rotation d'un pignon. Lors du déplacement de l'organe de préhension le long de son trajet, le pignon engrène avec une crémaillère fixe qui permet ainsi de faire tourner l'organe de préhension sur lui-même à une vitesse de rotation proportionnelle à la vitesse de déplacement le long du trajet.

Un tel dispositif est cependant coûteux à entretenir car les pignons et les crémaillères sont des pièces de contact qui s'usent au cours du fonctionnement de la machine.

En outre, lorsque les récipients sont destinés à recevoir des boissons alimentaires, la lubrification de la crémaillère doit répondre à des normes très contraignantes pour éviter la contamination des récipients.

Par ailleurs, le contact entre les dents du pignon et la crémaillère produit des nuisances sonores susceptibles de porter atteinte à la santé des opérateurs à proximité de la machine, notamment lorsque le dispositif de transport comporte plusieurs dizaines d'organes de préhension circulant très rapidement.

Pour résoudre ce problème, on a déjà proposé de remplacer les moyens d'entraînement mécanique "pignon-crémaillère" par des moyens d'entraînement magnétique sans contact.

Le pignon est alors remplacé par un rotor comportant à sa périphérie des pôles magnétiques de polarité alternée. La crémaillère est remplacée par un rail comportant aussi une série de pôles magnétiques de polarité alternée. Dans ce dispositif connu, le rail magnétique est agencé de manière tangentielle par rapport au rotor, avec réservation d'un entrefer radial. Lors du déplacement de l'organe de préhension le long de son trajet, la périphérie du rotor passe en vis-à-vis de chaque pôle du rail selon une direction radiale, c'est-à-dire orthogonale à l'axe de rotation de l'organe de préhension. Un tel dispositif est par exemple divulgué par le document EP-A1-2.100.717, correspondant au préambule de la revendication 1.

Cependant, à l'usage, un tel dispositif ne donne pas satisfaction. On a en effet constaté que les lignes de champ magnétique entre les pôles du rotor et les pôles du rail sont orientées radialement par rapport à l'axe de rotation. Ceci se traduit par une force d'attraction radiale du rotor vers le rail. Or, la force d'attraction produit un couple dans l'arbre qui assure la liaison mécanique entre l'organe de préhension et le rotor. Ce couple est susceptible d'endommager des paliers de roulement de l'arbre de liaison et de fausser le mouvement de rotation propre de l'organe de préhension.

En outre, on a constaté que la rotation régulière de l'organe de préhension n'était plus assurée lorsque l'organe de préhension circule le long de son trajet avec une vitesse dépassant une vitesse limite dite "de décrochage". Le rotor "saute" alors des pôles du rail fixe sans tourner. Or la vitesse de décrochage de ce système est bien inférieure aux vitesses de circulation actuellement pratiquées en utilisant des moyens d'entraînement "pignon-crémaillère".

La présente invention propose un dispositif de transport du type décrit précédemment, caractérisé en ce que les lignes de champ magnétique entre chaque élément magnétique du stator et chaque élément magnétique proximal du rotor sont dirigées sensiblement parallèlement à l'axe vertical de rotation du rotor.

Selon d'autres caractéristiques de l'invention :
- le stator comporte un premier rail d'éléments magnétiques qui sont agencés verticalement en vis-à-vis d'une face supérieure du rotor ;
- le stator comporte un deuxième rail d'éléments magnétiques qui sont agencés verticalement en vis-à-vis d'une face inférieure du rotor ;
- les éléments magnétiques du rotor sont des éléments magnétiques actifs qui sont susceptibles d'émettre un champ magnétique ;
- chaque élément magnétique du rotor est formé par un aimant permanent dont l'axe polaire est orienté verticalement ;
- les éléments magnétiques du stator sont des éléments magnétiques passifs qui sont susceptibles de guider un champ magnétique ;
- le stator comporte un premier rail supérieur et un deuxième rail inférieur qui sont chacun réalisés en un matériau ferromagnétique, chaque rail présentant une face en vis-à-vis de l'autre rail qui est munie d'une succession de dents verticalement saillantes dont chacune forme un élément magnétique passif, les dents des deux rails étant agencées en concordance de manière que les lignes de champ magnétique émises verticalement par l'élément magnétique actif du rotor passant entre une paire déterminée de dents dites "centrales" soient guidé vers les deux dents directement adjacentes de chaque rail, les dents adjacentes présentant une polarité inverse de la dent centrale ;
- les éléments magnétiques du stator sont des éléments magnétiques actifs qui sont susceptibles d'émettre un champ magnétique ;
- chaque élément magnétique du stator est formé par un aimant permanent dont l'axe polaire est orienté verticalement ;
- les éléments magnétiques du rotor sont des éléments magnétiques passifs qui sont susceptibles de guider un champ magnétique ;
- chaque élément magnétique du stator et chaque élément magnétique du rotor présentent un pôle magnétique qui est tourné vers les éléments magnétiques du rotor, lesdits pôles desdits éléments magnétiques du stator présentant un motif d'alternance déterminé entre la polarité "nord" et la polarité "sud" et lesdits pôles desdits éléments magnétiques du rotor présentant un motif d'alternance déterminé de leur polarité ;
- chaque élément magnétique du rotor, respectivement du stator, présente une inversion de polarité par rapport aux éléments magnétiques adjacents du rotor, respectivement du stator.

D'autres caractéristiques et avantages de l'invention apparaitront au cours de la lecture de la description détaillée qui va suivre pour la compréhension de laquelle on se reportera aux dessins annexés parmi lesquels :
- la figure 1 est une vue en perspective qui représente un dispositif de transport réalisé selon les enseignements de l'invention ;
- la figure 2 est une vue en perspective des organes de préhension du dispositif de la figure 1 ;
- la figure 3 est une vue en coupe axiale selon le plan de coupe 3-3 transversal de la figure 1 qui représente un organe de préhension muni d'un rotor engagé dans un stator ;
- la figure 4 est une vue en coupe horizontale selon le plan de coupe 4-4 de la figure 3 qui représente le rotor de l'organe de préhension ;
- la figure 5 est une vue de détail à plus grande échelle de la figure 3 qui représente le rotor de l'organe de préhension et le stator ;
- la figure 6 est une vue de face qui représente le stator.

Pour la suite de la description, des éléments présentant une structure identique ou des fonctions analogues seront désignés par des mêmes numéros de référence.

Pour la suite de la description, on adoptera à titre non limitatif des orientations :
- longitudinale qui est dirigée d'arrière en avant selon le sens de déplacement des organes de préhension le long de leur trajet, et qui est indiquée par la flèche "L" des figures ;
- verticale qui est dirigée de bas en haut et qui indiquée par la flèche "V" des figures ;
- transversale qui est dirigée de gauche à droite et qui est indiquée par la flèche "T" des figures.

La direction verticale "V" est utilisée à uniquement pour simplifier la compréhension de la description. Elle est indépendante de la direction de la gravité.

Par la suite le terme "radial" sera utilisé pour désigner une direction orthogonale à l'axe "A" vertical de rotation de l'organe 22 de préhension.

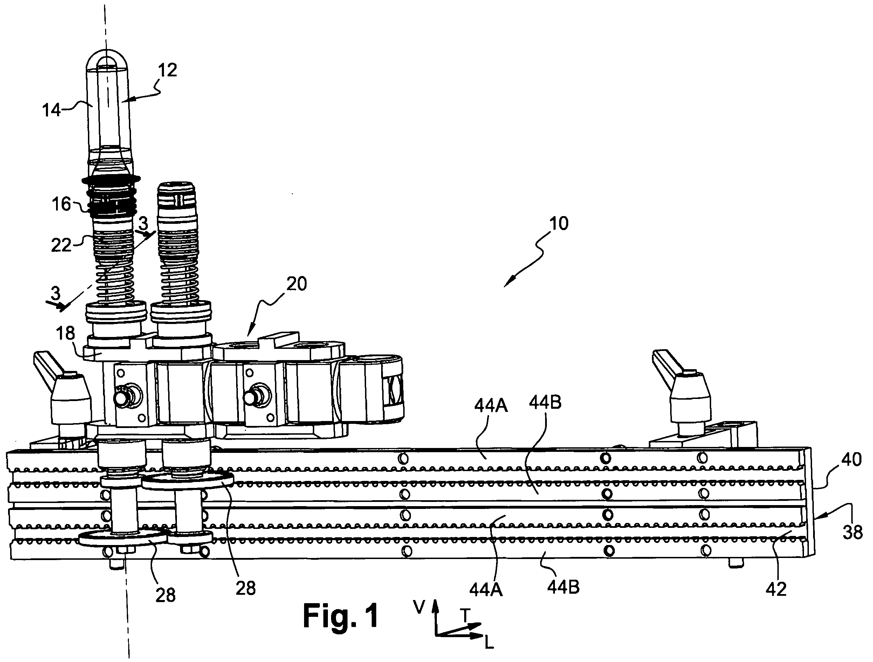

On a représenté à la figure 1 un dispositif 10 de transport pour un récipient 12 muni d'un col. Le dispositif 10 est destiné à transporter le récipient 12 le long d'un trajet déterminé à travers un four comportant des moyens de chauffage (non représentés). Les moyens de chauffage sont par exemple des lampes à infrarouge qui sont agencées de part et d'autre du trajet.

Le récipient 12 est ici une préforme qui présente un corps 14 cylindrique tubulaire d'axe "A" vertical fermé à l'une de ses extrémités axiales, et qui est prolongé à son autre extrémité par un col 16, lui aussi tubulaire. Le récipient 12 présente ainsi un axe "A" vertical principal passant par le centre du col 16 inférieur.

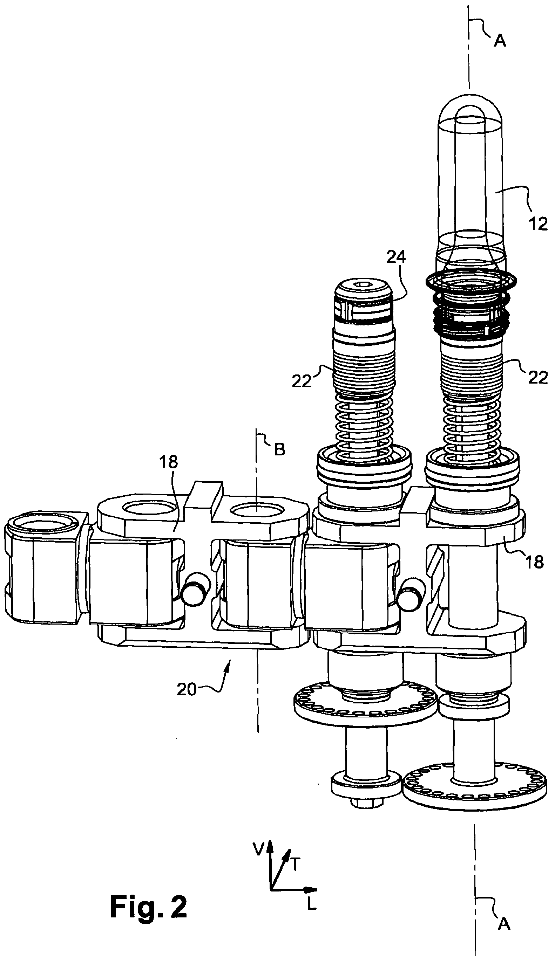

Comme représenté plus en détail à la figure 2, le dispositif 10 de transport comporte un support 18 mobile en translation le long du trajet. Le support 18 mobile est ici formé par un maillon d'une chaîne 20 fermée. Pour ne pas surcharger les figures, seuls deux supports 18 de la chaîne 20 ont été représentés aux figures. La chaîne 20 comporte ainsi une succession de supports 18. La chaîne 20 s'étend selon la direction longitudinale du trajet.

Chaque support 18 est articulé aux supports 18 adjacents en pivotement autour d'un axe "B" vertical qui coïncide avec l'axe "A" principal du récipient 12 transporté.

La chaîne 20 est susceptible d'être mise en mouvement le long du trajet horizontal par des moyens de motorisation non représentés.

Chaque support 18 est ici susceptible de porter deux organes 22 de préhension identiques comme cela a été illustré pour l'un des supports 18 représenté aux figures. En référence aux figures, seul l'organe 22 de préhension représenté portant le récipient 12 sera décrit par la suite, la description étant applicable aux autres organes de préhension par la suite.

L'organe 22 de préhension du récipient 12 est plus particulièrement porté par le support 18 de manière rotative autour d'un axe "A" vertical correspondant à l'axe "A" principal du récipient 12. Ceci permet de mettre le récipient 12 en rotation propre autour de son axe "A" principal lors de sont déplacement le long du trajet.

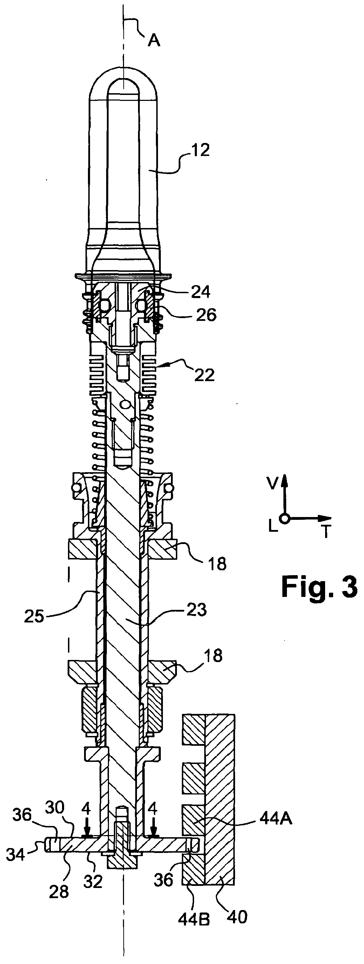

Comme illustré à la figure 3, l'organe 22 de préhension comporte plus particulièrement un arbre 23 d'axe "A" vertical coaxial à l'axe "A" de rotation. L'arbre 23 est monté à rotation dans le support 18 par l'intermédiaire d'un palier 25.

L'organe 22 de préhension est susceptible de saisir le col 16 du récipient 12 de manière que son axe "A" principal coïncide avec l'axe "A" de rotation de l'organe 22 de préhension.

A cet effet, l'organe 22 de préhension comporte un mandrin 24 qui est fixé à l'extrémité supérieure de l'arbre 23, au-dessus du support 18. Le mandrin 24 est agencé coaxialement à l'axe "A" de rotation. Le mandrin 24 est susceptible d'être inséré axialement dans le col 16 du récipient 12 pour saisir le récipient 12.

Le mandrin 24 est plus particulièrement formé par au moins trois segments 26 qui sont agencés autour de l'axe "A". Chaque segment 26 est poussé radialement vers l'extérieur dans une position expansé contre la paroi cylindrique interne du col 16 pour bloquer le récipient 12 par frottement.

Un rotor 28 est fixé à l'extrémité inférieure de l'arbre 23, au-dessous du support 18. Le rotor 28 est ainsi monté solidaire en rotation avec le mandrin 24.

Le rotor 28 se présente sous la forme d'un disque d'axe "A" délimité verticalement par une face 30 circulaire supérieure et par une face 32 circulaire inférieure. Le rotor 28 est délimité radialement par un bord 34 circulaire.

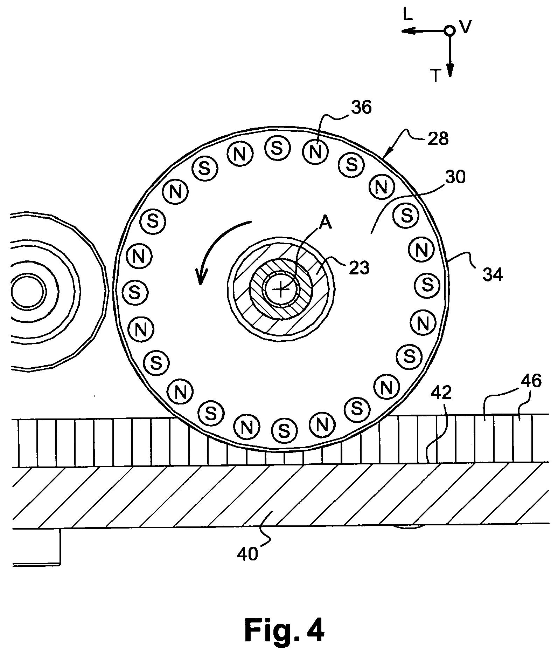

Comme représenté à la figure 4, la périphérie du rotor 28 présente une succession d'orifices verticaux débouchant dans les deux sens. Des éléments 36 magnétiques sont enchâssés dans les orifices formant ainsi une couronne d'éléments 36 magnétiques qui est centrée sur l'axe "A" et qui est agencée à proximité du bord 34 du rotor 28. Les extrémités verticales de chaque élément 36 magnétiques affleurent à la face 30, 32 associée du rotor 28. Le rotor 28 comporte ainsi une pluralité d'éléments 36 magnétiques agencés en couronne autour de l'axe "A" de rotation.

Chaque élément 36 magnétique du rotor 28 est un élément magnétique "actif", c'est-à-dire un élément magnétique qui est susceptible d'émettre un champ magnétique.

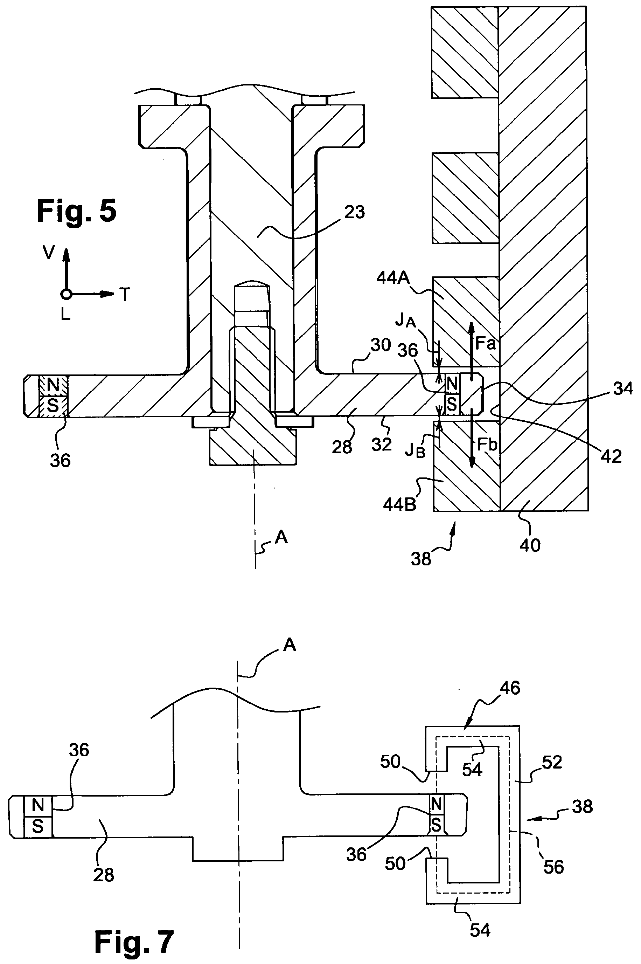

Dans l'exemple représenté aux figures 4 et 5, chaque élément 36 magnétique du rotor 28 est formé par un aimant permanent dont l'axe polaire est orienté verticalement. L'axe polaire est défini comme une droite imaginaire qui relie le pôle sud au pôle nord d'un même élément 36 magnétique.

En variante, un élément magnétique actif pourra aussi être formé par un électroaimant. Chaque électroaimant est commandé de manière à émettre un champs électromagnétique constant lors du passage d'un organe 22 de préhension.

Chaque élément 36 magnétique présente ainsi deux pôles de polarités opposées dont chacun est agencé sur une face 30, 32 du rotor 28. La polarité "nord" des pôles est indiquée à la figure 4 par la référence "N", tandis que la polarité opposée "sud" est indiquée par la lettre "S".

Il s'agit par exemple d'aimants réalisés par un alliage de néodyme, de fer et de bore, encore désigné "NdFeB" selon les abréviations de la classification périodique des éléments.

Pour éviter que le champ magnétique produit par les éléments 36 magnétiques actifs ne soit perturbé, le rotor 28 est réalisé en un matériau non ferromagnétique tel que de l'aluminium.

En variante, les éléments magnétiques du rotor sont formés par des électroaimants. Le champ magnétique est alors commandé en fonction de l'alimentation électrique des électroaimants.

Comme représenté à la figure 4, les éléments 36 magnétiques du rotor 28 sont présents en nombre paire de manière à pouvoir alterner leur polarité selon un motif d'un pôle sur deux. Chaque élément 36 magnétique du rotor 28, présente ainsi une inversion de polarité par rapport aux éléments 36 magnétiques adjacents du rotor 28.

En variante, le motif d'alternance de la polarité est différent. Par exemple, sur quatre pôles successifs, les deux premiers pôles présentent une polarité "nord" tandis que les deux pôles suivants présentes une polarité "sud".

Selon encore une autre variante, d'autres motifs d'alternance sont encore possibles. On comprendra bien entendu que le mot "alternance" implique que chaque motif comporte au moins une polarité "nord" et au moins une polarité "sud".

Comme représenté à la figure 5, le dispositif 10 de transport comporte aussi un stator 38 linéaire. Le stator 38 linéaire comporte un panneau 40 de support qui présente une face 42 longitudinale verticale, dite par la suite "face 42 latérale" qui est tournée vers le rotor 28.

La face 42 latérale s'étend ainsi parallèlement au trajet du rotor 28 sur au moins une portion du trajet total, de manière à réserver un jeu transversal entre le bord 34 du rotor 28 et la face 42 latérale. Le jeu transversal demeure constant lors du déplacement du support 18.

Le stator 38 comporte en outre une paire de rails 44A, 44B parallèles entre eux et agencés l'un au dessus de l'autre. Chaque rail 44A, 44B présente ainsi une face 45A, 45B, dite face 45A, 45B "interne", qui est agencée verticalement en vis-à-vis de l'autre rail 44A, 44B.

La face 45A, 45B interne de chaque rail 44A, 44B comporte une succession d'éléments 46 magnétiques.

Chaque rail 44A, 44B est fixé contre la face 42 latérale du panneau 40. Chaque rail 44A, 44B s'étend parallèlement au trajet du rotor 28.

Ainsi, un premier rail 44A d'éléments 46 magnétiques est agencé verticalement en vis-à-vis de la face 30 supérieure du rotor 28 de manière que la distance verticale entre les éléments 46 magnétiques et la face 30 supérieure du rotor 28 soit constante. Cette distance verticale sera par la suite appelée "entrefer "Ja" supérieur".

Un deuxième rail 44B d'éléments 46 magnétiques est agencé verticalement en vis-à-vis de la face 32 inférieure du rotor 28 de manière que la distance verticale entre les éléments 46 magnétiques et la face 32 inférieure du rotor 28 soit constante. Cette distance verticale sera par la suite appelée "entrefer "Jb" inférieur".

Ainsi, la succession d'éléments 46 magnétiques de chaque rail 44A, 44B est agencée de manière fixe sur au moins une portion du trajet tangentiellement à la couronne d'éléments 36 magnétiques du rotor 28 en vue de dessus comme cela est représenté à la figure 4.

Comme représenté plus en détail à la figure 5, les rails 44A, 44B sont agencés de manière que l'entrefer "Ja" supérieur soit égal à l'entrefer "Jb" inférieur.

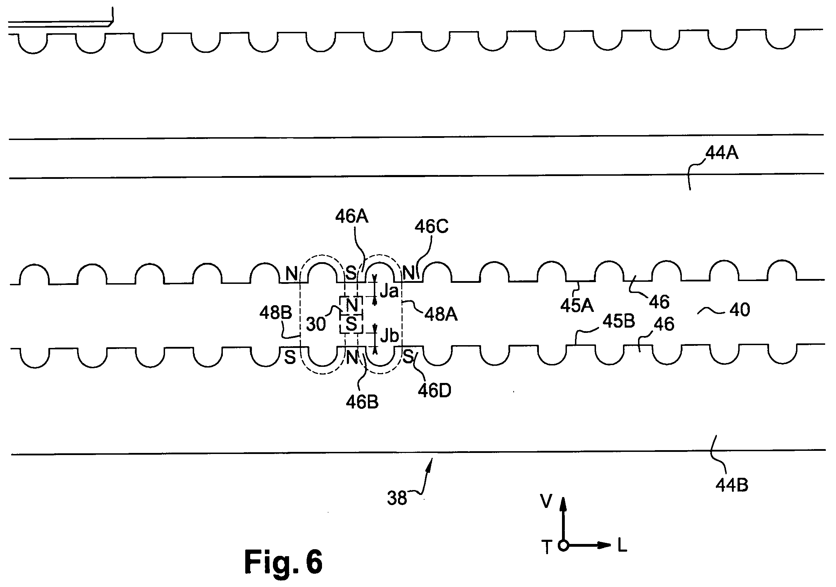

Comme représenté plus en détail à la figure 6, les éléments 46 magnétiques de chaque rail 44A, 44B sont des éléments magnétiques passifs qui sont susceptibles de guider un champ magnétique sans toutefois être la source d'un champ magnétique.

A cet effet, chaque rail 44A, 44B est ici réalisé en un matériau ferromagnétique tel que de l'acier, par exemple de l'acier "E24-2", désormais désigné "S235JR".

Pour permettre la formation de pôles magnétique, la face 45A, 45B interne de chaque rail 44A, 44B comporte une succession d'encoches transversales qui délimitent une succession longitudinale de dents 46 verticalement saillantes. Chacune des dents 46 forme un des éléments 46 magnétiques passifs.

Comme représenté à la figure 6, les dents 46 des deux rails 44A, 44B sont agencés en concordance verticale.

Ainsi, lorsque qu'une portion périphérique du rotor 28 est reçue entre les deux rails 44A, 44B, l'élément 36 magnétique du rotor 28 le plus proche du stator 38 est attiré magnétiquement entre une paire de deux dents 46 en vis-à-vis de chaque rail 44A, 44B, provoquant éventuellement la rotation du rotor 28 pour atteindre cette configuration.

Pour les besoins de la description, en référence à la figure 6, chacune desdites dents 46 de la paire seront appelées "dent 46A centrale supérieure" et "dent 46B centrale inférieure". La dent directement en avant de la dent 46A centrale supérieure sera appelée "dent 46C avant supérieure" et la dent directement en avant de la dent 46B centrale inférieure sera appelée "dent 46D avant inférieure". Ainsi, les deux dents 46C, 46D avant sont agencées en coïncidence verticale. Ces différentes appellations permettent de localiser plus facilement les dents 46 dont il s'agit, néanmoins, on comprendra que toutes les dents 46 des rails 44A, 44B présentent une structure identique.

Dans cette configuration, les lignes de champ magnétique sont guidées de manière à former une première boucle 48A vers l'avant et une deuxième boucle 48B vers l'arrière.

En suivant le cheminement de la première boucle 48A depuis le pôle nord "N" de l'élément 36 magnétique du rotor 28 vers son pôle sud "S", la ligne de champ parcourt verticalement l'entrefer supérieur "Ja", puis elle pénètre dans la dent 46A centrale supérieure par son extrémité inférieure. La ligne de champ contourne ensuite l'encoche directement en avant de ladite dent 46A centrale supérieure. La ligne de champ est guidée ensuite verticalement à travers la dent 46C avant supérieure. Elle parcourt verticalement la distance séparant l'extrémité inférieure libre de la dent 46C avant supérieure jusqu'à l'extrémité supérieure libre de la dent 46D avant inférieure. Puis elle contourne l'encoche directement précédente pour revenir vers la dent 46B centrale inférieure. Elle parcourt verticalement l'entrefer "Jb" inférieur jusqu'au pôle sud "S" de l'élément 36 magnétique du rotor 28.

Le cheminement de la deuxième boucle 48B est symétrique par rapport à un plan transversal passant par les dents 46A, 46B centrales.

La profondeur de chaque encoche est déterminée de manière à permettre la transmission des lignes de champ depuis la dent centrale 46A, 46B vers les dents directement adjacentes du même rail 44A, 44B.

De cette manière, pour chaque rail 44A, 44B, les deux dents 46 adjacentes présentent une polarité magnétique opposée à celle de la dent 46 centrale.

Ainsi, les lignes de champ magnétique émises verticalement par l'élément 36 magnétique du rotor 28 passant entre une paire déterminée de dents 46 centrales sont guidées vers les deux dents 46 directement adjacentes de chaque rail 44A, 44B, les dents 46 adjacentes présentant une polarité inverse de la dent 46 centrale.

Chaque élément 46 magnétique du stator 38 présente ainsi un pôle magnétique qui est tourné vers les éléments 36 magnétiques du rotor 28, lesdits pôles desdits éléments 46 magnétiques du stator 38 présentant un motif d'alternance déterminé entre la polarité "nord" et la polarité "sud". Chaque élément 46 magnétique du stator 38 présente ainsi une inversion de polarité par rapport aux éléments 46 magnétiques adjacents.

Dans cette configuration, le stator 38 est agencé de manière que les lignes de champ magnétique entre chaque élément 46 magnétique du stator 38 et chaque élément 36 magnétique à proximité est dirigé sensiblement parallèlement à l'axe "A" vertical de rotation du rotor 28.

Chaque élément 46 magnétique du stator 38 est susceptible d'interagir magnétiquement avec chaque élément 36 magnétique à proximité du rotor 28 pour entraîner en rotation l'organe 22 de préhension lors de son déplacement longitudinal le long du trajet.

Plus particulièrement, chaque élément 46 magnétique du stator 38 est susceptible d'interagir par aimantation avec chaque élément 36 magnétique proximal du rotor 28. L'interaction par aimantation se traduit par le fait que chaque élément 46 magnétique du stator 38 est susceptible d'attirer magnétiquement au moins un élément 36 proximal du rotor 28. L'entraînement en rotation est encore plus efficace lorsque l'interaction par aimantation produit aussi une force de répulsion magnétique entre ledit élément 46 magnétique du stator et au moins un autre élément 36 proximal du rotor 28.

Ainsi, en partant de la configuration décrite en référence à la figure 6, lorsque l'organe 22 de préhension est déplacé longitudinalement vers l'avant, l'élément 36 magnétique de rotor 28 qui était entre les deux dents 46A, 46B centrale est repoussé magnétiquement par les dents 46C, 46D du fait de leur polarisation. Le rotor 28 a alors tendance à tourner dans un sens antihoraire selon la figure 4, à la manière d'une roue sur une route, les dents 46A, 46B centrales servant de pivot. L'élément 36 magnétique en prise avec les dents 46A, 46B centrales sera par la suite appelé "élément 36 pivot".

L'élément 36 magnétique directement suivant l'élément 36 pivot du rotor 28 présente une polarité inverse de celle de l'élément 36 pivot. La rotation du rotor 28 rapproche ledit élément 36 suivant des dents 46C, 46D avant. Les dents 46C, 46D avant attirent ainsi l'élément 36 suivant entre elles, ce qui contribue à faire tourner le rotor 28 dans le sens antihoraire. Les dents 46C, 46D jouent alors le rôle des dents 46A, 46B centrales tel qu'expliqué précédemment pour continuer à faire tourner le rotor 28 dans le même sens tout au long du trajet.

De cette manière, le déplacement de l'organe 22 de préhension le long des rails 44A, 44B provoque la rotation du rotor 28.

L'initiation du mouvement de rotation et l'entretien du mouvement de rotation sont obtenus grâce à la combinaison entre les motifs d'alternance de polarité des éléments 36 magnétiques de rotor 28 et les motifs d'alternance de polarité des éléments 46 magnétiques de stator 38.

Le pas entre deux dents 46 successives d'un rail 44A, 44B est égal au pas entre deux éléments 36 magnétiques du rotor 28. Ce pas est déterminé de manière que la rotation du rotor 28 soit la plus régulière possible.

Cette configuration est très avantageuse car chaque élément 36 magnétique lors de son passage entre les deux rails 44A, 44B, est attiré magnétiquement par une force "Fa, Fb" verticale par chacun des rails 44A, 44B. La force d'attraction "Fa" par le rail 44A supérieur est sensiblement égale à la force d'attraction "Fb" par le rail inférieur. De ce fait, les moyens de mise en rotation de l'organe 22 de préhension n'appliquent aucune contrainte à l'arbre 23 ni au palier 25.

En outre, dans cette configuration, la composante radiale de la force magnétique appliquée à l'arbre 23 est négligeable.

Dans l'exemple représenté aux figures, notamment à la figure 1, le stator 38 comporte deux paires de rails 44A, 44B. Ainsi, les rotors 28 de deux organes 22 de préhension successifs sont agencées à une hauteur différente pour être reçus chacun dans une paire de rails 44A, 44B associée. Ceci permet notamment d'équiper les organes 22 de préhension de rotor 28 de grands diamètres qui ne pourraient pas être agencés à la même hauteur sans interférer. Le fait de disposer de rotor 28 de grand diamètre permet d'augmenter le couple de rotation appliqué à l'arbre 23 lors du déplacement des organes 22 de préhension.

En outre, on pourra prévoir des moyens de réglage des entrefers "Ja, Jb" et du jeu transversal. Ces moyens sont par exemple formés par des vis qui permettent le coulissement vertical et/ou transversal du stator 38 par rapport à un bâti fixe (non représenté) afin de régler finement la position du stator 38 par rapport au trajet des organes 22 de préhension.

Par ailleurs, l'aspect crénelé des rails 44A, 44B est susceptible de poser des problèmes de nettoyage. Des particules polluantes ou des germes peuvent en effet venir se loger entre deux dents 46, au fond des encoches. Pour faciliter le nettoyage et l'aseptisation des rails 44A, 44B, les encoches sont avantageusement remplies d'une résine ou de tout autre matériau n'ayant pas d'influence sur le champ magnétique. Le matériau de remplissage rempli les encoches de manière que le côté crénelé de chaque rail 44A, 44B présente une face lisse, plus simple à nettoyer. Cette caractéristique est susceptible d'être appliqué à tous les modes de réalisation de l'invention.

Selon un deuxième mode non représenté de réalisation de l'invention, le stator ne comporte qu'un seul rail. Seules les différences entre ce mode de réalisation et le premier mode de réalisation précédemment décrit seront décrits par la suite. Le fonctionnement du dispositif selon ce mode de réalisation est analogue à celui du premier mode de réalisation et ne sera pas décrit par la suite.

Dans ce deuxième mode de réalisation, le stator comporte une paire de rail comme définie dans le premier mode de réalisation..

Les éléments magnétiques du stator sont alors formés par des éléments magnétiques actifs qui sont susceptibles d'émettre un champ magnétique.

Chaque rail est alors réalisé en un matériau non ferromagnétique. Chaque rail est muni de logements susceptibles de recevoir un élément magnétique actif tels que des aimants permanents ou des électroaimants. Chaque élément magnétique présente une orientation polaire verticale.

Les éléments magnétiques actifs verticalement en vis-à-vis de chaque rail sont alors agencés de manière que leur polarité soit opposés, c'est-à-dire de manière que lesdits éléments magnétiques en vis-à-vis s'attirent.

Pour chaque rail, les éléments magnétiques sont agencés de manière à inverser leur polarité en alternance.

La disposition des pôles est telle que, lorsqu'un élément magnétique du rotor passe au droit d'un élément magnétique du stator, les lignes de champ magnétique soient orientées verticalement.

Ce dispositif réalisé selon le deuxième mode de réalisation de l'invention fonctionne de la même manière que celui du premier mode de réalisation.

Cette configuration est très avantageuse car chaque élément magnétique du rotor lors de son passage entre les deux rails, est attiré magnétiquement par deux forces verticales opposées et égales par chacun des rails. De ce fait, les moyens de mise en rotation de l'organe de préhension n'appliquent aucune contrainte à l'arbre ni au palier.

Selon une variante non représenté de ce deuxième mode de réalisation de l'invention, le stator ne comporte que l'un des deux rails supérieur ou inférieur. Toutefois, un élément magnétique de rotor passant au droit du rail est attiré par une unique force d'attraction magnétique verticale. Ceci ne présente pas un inconvénient majeur car le couple de flexion exercé sur l'arbre 23 par cette force d'attraction demeure relativement faible si la distance radiale qu'il existe entre l'élément magnétique du rotor et l'axe "A" de rotation de l'arbre est assez courte. Par exemple si cette distance est plus petite que la distance séparant verticalement le rotor du palier de l'arbre 23.

Selon une autre variante non représentée de ce deuxième mode de réalisation de l'invention, les éléments magnétiques du rotor sont des éléments magnétiques passifs qui sont susceptibles de guider un champ magnétique. Il s'agira par exemple de dents réalisées en matériau ferromagnétique comme expliqué pour le stator du premier mode de réalisation.

Selon un troisième mode de réalisation de l'invention représenté à la figure 7, les rails 44A, 44B du premier mode de réalisation sont remplacés par une succession longitudinale d'éléments 46 magnétiques passifs en forme de "C". Le rotor 28 est équipé d'éléments 36 magnétiques actifs comme cela est décrit dans le premier mode de réalisation.

Chaque élément 46 magnétique est réalisé en un matériau ferromagnétique et présente une forme de "C" ouvert transversalement vers le rotor 28. Chaque élément 46 ferromagnétique présente ainsi deux extrémités 50 libres qui sont agencées verticalement en vis-à-vis l'une de l'autre et entre lesquelles est reçu un élément 36 magnétique actif du rotor 28 avec un jeu vertical "Ja, Jb". Les deux extrémités 50 libres sont reliées entre elles par un montant 52 vertical auquel elles sont elles-mêmes reliées par un bras 54 transversal.

La succession des extrémités 50 libres supérieures est fonctionnellement équivalente au rail 44A supérieur du premier mode de réalisation, tandis que la succession des extrémités 50 libres inférieures est fonctionnellement équivalente au rail 44B inférieur du premier mode de réalisation.

Les éléments 46 magnétiques en forme de "C" sont écartés longitudinalement l'une de l'autre du même pas que les dents décrites dans le premier mode de réalisation. Les éléments 46 magnétiques sont avantageusement portés par un support en matériau amagnétique, ainsi, les lignes de champ magnétique entrant par une extrémité libre d'un élément 46 magnétique central ne sont pas transmises vers les éléments 46 magnétique précédent ni suivant.

Lorsqu'un élément 36 magnétique actif du rotor 28 est reçu entre les extrémités 50 libres d'un élément 46 magnétique en forme de "C", les lignes 56 de champs magnétique émises verticalement par l'élément 36 magnétique du rotor 28 sont guidées à travers les bras 54 transversaux et le montant 52 pour former une boucle 56 s'étendant dans un plan transversal.

Dans cette configuration, le stator 38 est agencé de manière que les lignes 56 de champ magnétique émises par chaque élément 46 magnétique du stator 38 en direction de chaque élément 36 magnétique à proximité soient dirigées sensiblement parallèlement à l'axe "A" vertical de rotation du rotor 28.

Lorsque l'organe 22 de préhension est déplacé longitudinalement, l'élément 36 magnétique de rotor 28 en prise entre les deux extrémités 50 libres de l'élément 46 magnétique de stator 38 forme un point de pivot qui permet de faire tourner le rotor 28. Ceci permet d'approcher l'élément 36 magnétique suivant du rotor 28 de l'élément 46 magnétique suivant de stator 38 suffisamment pour attirer ledit élément 36 magnétique suivant de rotor 28 entre les deux extrémités 50 libres dudit élément 36 magnétique suivant de stator 38. Cette attraction participe à la rotation du rotor 28, tandis que l'élément 36 magnétique précédent de rotor 28 échappe à l'attraction de l'élément 46 magnétique précédent de stator 38.

En poursuivant le déplacement longitudinal de l'organe 22 de préhension le long de l'alignement d'éléments 46 magnétique en forme de "C", le rotor 28 poursuit son mouvement de rotation à la manière d'une roue roulant contre ledit alignement.

En variante de ce troisième mode de réalisation, le montant de chaque élément est entouré d'un bobinage électrique de manière que chaque élément magnétique du stator soit susceptible de devenir un électroaimant.

Le dispositif 10 de transport réalisé selon les enseignements de l'invention permet ainsi de réaliser une mise en rotation sans contact de l'organe de préhension. La mise en rotation est réalisée par le déplacement des organes 22 de préhension le long de leur trajectoire.

Outre les avantages déjà décrits en préambule de la description, le dispositif réalisé selon les enseignements de l'invention permet de diminuer, voire d'éliminer, les contraintes que créaient les forces magnétiques sur l'arbre 23 ou sur son palier 25.

On a par ailleurs constaté que pour des éléments magnétiques 36, 46 émettant un champ magnétique d'intensité égale, la disposition à flux magnétique vertical selon les enseignements de l'invention permet d'obtenir une vitesse de décrochage supérieure à celle d'une disposition à flux magnétique radiale telle que décrite dans l'état de la technique.

Par ailleurs, la diminution, voire la disparition, des contraintes créées par les forces magnétique sur l'arbre 23 permet d'augmenter l'intensité des champs magnétiques émis par les éléments 36, 46 magnétiques sans risque de détérioration de l'arbre 23 ou de son palier 25. Ceci permet d'augmenter encore la vitesse de décrochage du dispositif 10 de transport. Il en résulte une cadence de défilement plus élevée des organes 22 de préhension le long de leur trajet sans observer de décrochage.

## Revendications

1. Dispositif (10) de transport pour un récipient (12) en matériau thermoplastique muni d'un col (16) qui comporte :
- un support (18) mobile le long d'un trajet déterminé ;
- un organe (22) de préhension du récipient (12) par son col (16) qui est porté par le support (18) de manière rotative autour d'un axe (A) vertical ;
- un rotor (28) qui est monté solidaire en rotation avec l'organe (22) de préhension et qui comporte à sa périphérie une pluralité d'éléments (36) magnétiques agencés en couronne ;
- un stator (38) linéaire formé par au moins un rail (44A, 44B) d'éléments magnétiques qui est agencé de manière fixe sur au moins une portion du trajet et qui comporte une succession d'éléments (46) magnétiques agencés parallèlement au trajet, dans lequel chaque élément (46) magnétique du stator (38) est susceptible d'interagir par aimantation avec des élément (36) magnétiques proximaux du rotor (46) pour entraîner en rotation l'organe (22) de préhension lors de son déplacement le long du trajet ;
**caractérisé en ce que** les lignes de champ magnétique entre chaque élément (46) magnétique du stator (38) et chaque élément (36) magnétique proximal du rotor (28) sont dirigées sensiblement parallèlement à l'axe (A) vertical de rotation du rotor (28).

2. Dispositif (10) selon la revendication précédente, **caractérisé en ce que** le stator (38) comporte un premier rail (44A) d'éléments magnétiques qui sont agencés verticalement en vis-à-vis d'une face (30) supérieure du rotor (28).

3. Dispositif (10) selon l'une quelconque des revendications précédentes, **caractérisé en ce que** le stator (38) comporte un deuxième rail (44B) d'éléments magnétiques qui sont agencés verticalement en vis-à-vis d'une face (32) inférieure du rotor (28).

4. Dispositif (10) selon l'une quelconque des revendications précédentes, **caractérisé en ce que** les éléments (36) magnétiques du rotor (28) sont des éléments (36) magnétiques actifs qui sont susceptibles d'émettre un champ magnétique.

5. Dispositif (10) selon la revendication précédente, **caractérisé en ce que** chaque élément (36) magnétique du rotor (28) est formé par un aimant permanent dont l'axe polaire est orienté verticalement.

6. Dispositif (10) selon l'une quelconque des revendications 4 ou 5, **caractérisé en ce que** les éléments (46) magnétiques du stator sont des éléments magnétiques passifs qui sont susceptibles de guider un champ magnétique.

7. Dispositif (10) selon les revendications 2, 3 et 4 prises en combinaison, **caractérisé en ce que** le stator (38) comporte un premier rail (44A) supérieur et un deuxième rail (44B) inférieur qui sont chacun réalisés en un matériau ferromagnétique, chaque rail (44A, 44B) présentant une face en vis-à-vis de l'autre rail qui est munie d'une succession de dents (46) verticalement saillantes dont chacune forme un élément (46) magnétique passif, les dents (46) des deux rails (44A, 44B) étant agencées en concordance de manière que les lignes de champ magnétique émises verticalement par l'élément (36) magnétique actif du rotor (28) passant entre une paire déterminée de dents (46A, 46B) dites "centrales" soient guidé vers les deux dents directement adjacentes de chaque rail (44A, 44B), les dents (46C, 46D) adjacentes présentant une polarité inverse de la dent (46A, 46B) centrale.

8. Dispositif (10) selon l'une quelconque des revendications 1 à 5, **caractérisé en ce que** les éléments (46) magnétiques du stator (38) sont des éléments magnétiques actifs qui sont susceptibles d'émettre un champ magnétique.

9. Dispositif (10) selon l'une quelconque des revendications précédentes, **caractérisé en ce que** chaque élément (46) magnétique du stator (38) est formé par un aimant permanent dont l'axe polaire est orienté verticalement.

10. Dispositif (10) selon l'une quelconque des revendications 8 ou 9, **caractérisé en ce que** les éléments (36) magnétiques du rotor (28) sont des éléments magnétiques passifs qui sont susceptibles de guider un champ magnétique.

11. Dispositif (10) selon la revendication 1, **caractérisé en ce que** le stator (38) est formé par un alignement d'éléments magnétiques (46) qui s'étend parallèlement au trajet de l'organe (22) de préhension, chaque élément magnétique présentant la forme d'un "C" ouvert en direction du rotor (28).

12. Dispositif (10) selon l'une quelconque des revendications précédentes, **caractérisé en ce que** chaque élément (46) magnétique du stator (38) et chaque élément (36) magnétique du rotor (28) présentent un pôle magnétique qui est tourné vers les éléments (36) magnétiques du rotor (28), lesdits pôles desdits éléments (46) magnétiques du stator (38) présentant un motif d'alternance déterminé entre la polarité "nord" et la polarité "sud" et lesdits pôles desdits éléments (36) magnétiques du rotor (28) présentant un motif d'alternance déterminé de leur polarité.

13. Dispositif (10) selon la revendication précédente, **caractérisé en ce que** chaque élément (36, 46) magnétique du rotor (28), respectivement du stator (38), présente une inversion de polarité par rapport aux éléments (36, 46) magnétiques adjacents du rotor (28), respectivement du stator (38).

## Patentansprüche

1. Fördervorrichtung (10) für ein Behältnis (12) aus Thermoplast, das mit einem Hals (16) versehen ist, umfassend:
- einen entlang einer bestimmten Bahn beweglichen Träger (18);
- ein Element (22) zum Ergreifen des Behältnisses (12) an seinem Hals (16), das von dem Träger (18) drehbar um eine Vertikalachse (A) getragen wird;
- einen Rotor (28), der drehfest mit dem Greifelement (22) verbunden ist und an seiner Peripherie eine Vielzahl von magnetischen Elementen (36) umfasst, die kranzartig angeordnet sind;
- einen linearen Stator (38), der von mindestens einer Schiene (44A, 44B) von magnetischen Elementen gebildet ist, die fest auf mindestens einem Abschnitt der Bahn angeordnet ist und eine Aufeinanderfolge von magnetischen Elementen (46) umfasst, die parallel zur Bahn angeordnet sind,
wobei jedes magnetische Element (46) des Stators (38) geeignet ist, durch Magnetisierung mit proximalen magnetischen Elementen (36) des Rotors (46) zu interagieren, um das Greifelement (22) bei seiner Bewegung entlang der Bahn anzutreiben;
**dadurch gekennzeichnet, dass** die Magnetfeldlinien zwischen jedem magnetischen Element (46) des Stators (38) und jedem proximalen magnetischen Element (36) des Rotors (28) im Wesentlichen parallel zur vertikalen Drehachse (A) des Rotors (28) ausgerichtet sind.

2. Vorrichtung (10) nach dem vorhergehenden Anspruch, **dadurch gekennzeichnet, dass** der Stator (38) eine erste Schiene (44A) von magnetischen Elementen, die vertikal gegenüber einer oberen Fläche (30) des Rotors (28) angeordnet sind, umfasst.

3. Vorrichtung (10) nach einem der vorhergehenden Ansprüche, **dadurch gekennzeichnet, dass** der Stator (38) eine zweite Schiene (44B) von magnetischen Elementen, die vertikal gegenüber einer unteren Fläche (32) des Rotors (28) angeordnet sind, umfasst.

4. Vorrichtung (10) nach einem der vorhergehenden Ansprüche, **dadurch gekennzeichnet, dass** die magnetischen Elemente (36) des Rotors (28) aktive magnetische Elemente (36) sind, die geeignet sind, ein Magnetfeld zu entsenden.

5. Vorrichtung (10) nach dem vorhergehenden Anspruch, **dadurch gekennzeichnet, dass** jedes magnetische Element (36) des Rotors (28) von einem Dauermagneten gebildet ist, dessen Polachse vertikal ausgerichtet ist.

6. Vorrichtung (10) nach einem der Ansprüche 4 oder 5, **dadurch gekennzeichnet, dass** die magnetischen Elemente (46) des Stators passive magnetische Elemente sind, die geeignet sind, ein Magnetfeld zu führen.

7. Vorrichtung (10) nach einem der Ansprüche 2, 3 und 4 in Kombination, **dadurch gekennzeichnet, dass** der Stator (38) eine erste obere Schiene (44A) und eine zweite untere Schiene (44B) umfasst, die jeweils aus einem ferromagnetischen Material hergestellt sind, wobei jede Schiene (44A, 44B) eine Fläche gegenüber der anderen Schiene aufweist, die mit einer Aufeinanderfolge von vertikal herausragenden Zähnen (46) versehen ist, von denen jeder ein passives magnetisches Element (46) bildet, wobei die Zähne (46) der beiden Schienen (44A, 44B) übereinstimmend angeordnet sind, so dass die vertikal von dem aktiven magnetischen Element (36) des Rotors (28) entsandten Magnetfeldlinien, die zwischen einem bestimmten Paar von so genannten "zentralen" Zähnen (46A, 46B) verlaufen, zu den beiden direkt angrenzenden Zähnen jeder Schiene (44A, 44B) geführt werden, wobei die angrenzenden Zähne (46C, 46D) eine umgekehrte Polarität zum zentralen Zahn (46A, 46B) aufweisen.

8. Vorrichtung (10) nach einem der Ansprüche 1 bis 5, **dadurch gekennzeichnet, dass** die magnetischen Elemente (46) des Stators (38) aktive magnetische Elemente sind, die geeignet sind, ein Magnetfeld zu entsenden.

9. Vorrichtung (10) nach einem der vorhergehenden Ansprüche, **dadurch gekennzeichnet, dass** jedes magnetische Element (46) des Stators (38) von einem Dauermagneten gebildet ist, dessen Polachse vertikal ausgerichtet ist.

10. Vorrichtung (10) nach einem der Ansprüche 8 oder 9, **dadurch gekennzeichnet, dass** die magnetischen Elemente (36) des Rotors (28) passive magnetische Elemente sind, die geeignet sind, ein Magnetfeld zu führen.

11. Vorrichtung (10) nach Anspruch 1, **dadurch gekennzeichnet, dass** der Stator (38) von einer Ausrichtung von magnetischen Elementen (46) gebildet ist, die sich parallel zu der Bahn des Greifelements (22) erstreckt, wobei jedes magnetische Element die Form eines "C" aufweist, die in Richtung des Rotors (28) offen ist.

12. Vorrichtung (10) nach einem der vorhergehenden Ansprüche, **dadurch gekennzeichnet, dass** jedes magnetische Element (46) des Stators (38) und jedes magnetische Element (36) des Rotors (28) einen Magnetpol aufweisen, der zu den magnetischen Elementen (36) des Rotors (28) gewandt ist, wobei die Pole der magnetischen Elemente (46) des Stators (38) ein bestimmtes Wechselmotiv zwischen der Polarität "Nord" und der Polarität "Süd" aufweisen, und die Pole der magnetischen Elemente (36) des Rotors (28) ein bestimmtes Wechselmotiv ihrer Polarität aufweisen.

13. Vorrichtung (10) nach dem vorhergehenden Anspruch, **dadurch gekennzeichnet, dass** jedes magnetische Element (36, 46) des Rotors (28) bzw. des Stators (38) eine Polaritätsumkehr im Vergleich mit den angrenzenden magnetischen Elementen (36, 46) des Rotors (28) bzw. des Stators (38) aufweist.

## Claims

1. Device (10) for conveying a container (12) made of thermoplastic material provided with a neck (16) which comprises:
- a support (18) that is mobile along a determined path;
- a member (22) for gripping the container (12) by its neck (16) which is borne by the support (18) so as to rotate about a vertical axis (A);
- a rotor (28) which is mounted secured in rotation with the gripping member (22) and which comprises, at its periphery, a plurality of magnetic elements (36) arranged in a ring;
- a linear stator (38) formed by at least one rail (44A, 44B) of magnetic elements which is arranged in a fixed manner over at least a portion of the path and which comprises a succession of magnetic elements (46) arranged parallel to the path,
in which each magnetic element (46) of the stator (38) is capable of interacting by magnetisation with proximal magnetic elements (36) of the rotor (46) to drive the gripping member (22) in rotation in its displacement along the path;
**characterized in that** the magnetic field lines between each magnetic element (46) of the stator (38) and each proximal magnetic element (36) of the rotor (28) are directed substantially parallel to the vertical axis (A) of rotation of the rotor (28).

2. Device (10) according to the preceding claim, **characterized in that** the stator (38) comprises a first rail (44A) of magnetic elements which are arranged vertically facing a top face (30) of the rotor (28).

3. Device (10) according to either one of the preceding claims, **characterized in that** the stator (38) comprises a second rail (44B) of magnetic elements which are arranged vertically facing a bottom face (32) of the rotor (28).

4. Device (10) according to any one of the preceding claims, **characterized in that** the magnetic elements (36) of the rotor (28) are active magnetic elements (36) which are capable of emitting a magnetic field.

5. Device (10) according to the preceding claim, **characterized in that** each magnetic element (36) of the rotor (28) is formed by a permanent magnet whose polar axis is oriented vertically.

6. Device (10) according to either one of Claims 4 and 5, **characterized in that** the magnetic elements (46) of the stator are passive magnetic elements which are capable of guiding a magnetic field.

7. Device (10) according to Claims 2, 3 and 4 taken in combination, **characterized in that** the stator (38) comprises a top first rail (44A) and a bottom second rail (44B) which are each produced in a ferromagnetic material, each rail (44A, 44B) having a face facing the other rail which is provided with a succession of vertically protruding teeth (46), each of which forms a passive magnetic element (46), the teeth (46) of the two rails (44A, 44B) being arranged conformably so that the magnetic field lines emitted vertically by the active magnetic element (36) of the rotor (28) passing between a determined pair of teeth (46A, 46B) called "central" teeth are guided towards the two directly adjacent teeth of each rail (44A, 44B), the adjacent teeth (46C, 46D) having a polarity that is the reverse of the central tooth (46A, 46B).

8. Device (10) according to any one of Claims 1 to 5, **characterized in that** the magnetic elements (46) of the stator (38) are active magnetic elements which are capable of emitting a magnetic field.

9. Device (10) according to any one of the preceding claims, **characterized in that** each magnetic element (46) of the stator (38) is formed by a permanent magnet whose polar axis is oriented vertically.

10. Device (10) according to either one of Claims 8 and 9, **characterized in that** the magnetic elements (36) of the rotor (28) are passive magnetic elements which are capable of guiding a magnetic field.

11. Device (10) according to Claim 1, **characterized in that** the stator (38) is formed by an alignment of magnetic elements (46) which extends parallel to the path of the gripping member (22), each magnetic element being in the form of a "C" open towards the rotor (28).

12. Device (10) according to any one of the preceding claims, **characterized in that** each magnetic element (46) of the stator (38) and each magnetic element (36) of the rotor (28) have a magnetic pole which is turned towards the magnetic elements (36) of the rotor (28), said poles of said magnetic elements (46) of the stator (38) exhibiting a determined pattern of alternation between the "north" pole and the "south" pole and said poles of said magnetic elements (36) of the rotor (28) exhibiting a determined pattern of alternation of their polarity.

13. Device (10) according to the preceding claim, **characterized in that** each magnetic element (36, 46) of the rotor (28), respectively of the stator (38), exhibits a polarity reversal relative to the adjacent magnetic elements (36, 46) of the rotor (28), respectively of the stator (38).
